# EUROPEAN PATENT SPECIFICATION

(11) **EP 1 521 182 B1**
(45) Date of publication and mention of the grant of the patent: **13.06.2007**
(21) Application number: 03728009.6
(22) Date of filing: 30.04.2003
(51) Int. Cl.: G06F 17/30

(54) **MULTIMEDIA INFORMATION PROVISION SYSTEM, MULTIMEDIA INFORMATION PROVISION METHOD, USER TERMINAL, MAIN SERVER AND ASSOCIATED SERVER**
MULTIMEDIA INFORMATIONSBEREITSTELLUNGSSYSTEM, MULTIMEDIA INFORMATIONSBEREITSTELLUNGSVERFAHREN, BENUTZERTERMINAL, HAUPTSERVER UND ASSOZIIERTER SERVER
SYSTEME ET PROCEDE DE GENERATION D'INFORMATIONS MULTIMEDIA, TERMINAL D'UTILISATEUR, SERVEUR PRINCIPAL ET SERVEUR ASSOCIE

(30) Priority: 10.07.2002 JP 2002201550; 18.02.2003 JP 2003040163
(43) Date of publication of application: 06.04.2005
(73) Proprietor: SHARP KABUSHIKI KAISHA, Osaka-shi, Osaka 545-8522 (JP)
(72) Inventor: SHIMIZU, Masahiro, Yamatokooriyama-shi, Nara 639-1031 (JP); IZUMI, Yoshihiro, Kashihara-shi, Nara 634-0007 (JP); NOHNO, Hitoshi, Nabari-shi, Mie 518-0746 (JP)
(74) Representative: Brown, Kenneth Richard
(86) International application number: PCT/JP2003/005502
(87) International publication number: WO 2004/008342

(56) References cited:
- WO-A-01/98950
- JP-A- 7 219 959
- JP-A- 8 115 330
- JP-A- 10 171 758
- JP-A- 2001 184 291
- JP-A- 2002 007 250
- US-A- 5 659 742
- US-A- 6 161 107

## Description

### TECHNICAL FIELD

The present invention relates to a multimedia information provision system, a multimedia information provision method, a user terminal, a main server and an associated server for providing multimedia information to a user.

### BACKGROUND ART

With recent developments in the information technology, it is becoming important even in our daily lives to efficiently obtain latest information. Newspapers, radio, television, etc., are common means to quickly obtain information regarding changes in the state of society, occurrence of incidents, etc.

Particularly, newspapers are widespread in our daily lives. Newspapers carry a large number of articles efficiently on the limited page space. Newspapers have a high portability and can be read during the commute to work or school. Furthermore, newspapers have a high recordability as necessary articles can be clipped out and saved. Moreover, newspapers have other advantages in that they are delivered to the residence of the subscriber, and in that one can easily scan a page and grasp the outline of the articles thereon.

However, newspapers at present are based on text-based explanation, and are more difficult to understand than television broadcast that makes full use of audio and moving images, except for some articles presented with still images (photographs, pictures, charts, etc.). One approach to make newspapers easier to understand may be to present each article with the text and a still image. However, presenting a still image for every article increases the printing cost and increases the number of pages, which may detract from the advantages such as the portability and the scannability.

On the other hand, television broadcast makes full use of audio and moving images, whereby one can obtain information with a strong impact from television broadcast, and the information is easily understood. However, it also has problems in that one cannot view a program repeatedly or one cannot obtain necessary information at a necessary time since what is broadcast is determined unilaterally. Furthermore, it is very difficult to obtain detailed information, e.g., text information, or the like, other than image information.

As an approach to make newspaper articles easier to understand, Japanese Laid-Open Patent Publication No. 7-115474 discloses a multimedia newspaper system for providing audio and/or image information regarding newspaper articles.

In the system disclosed in the publication, each article carried on a newspaper is given a barcode representing publisher identification information that identifies the publisher of the newspaper and article identification information that identifies the article. A communication terminal having a barcode reader for reading the barcode is provided at the residence of the reader of the newspaper. Detailed data regarding the articles of the newspaper is stored at the publisher, and a database from which the data are transmitted to the communication terminal at the reader's residence is provided at the publisher. The reader reads the barcode attached to an article of interest with the barcode reader and transmits the article identification information to the publisher based on the publisher identification information, whereby data regarding the article is transmitted from the database at the publisher to the communication terminal at the reader's residence. As a result, the reader can obtain audio information and/or image information regarding the article of interest.

WO 01/98950 discloses a system and method for presenting interactive programs over the internet. The programs include video and associated text which advances page-by-page in sync with the video access to additional information, including web pages stored by external servers, is provided by way of activation points in the text.

JP 2002 007250 discloses an electronic information acquisition system in which an identification code in printed matter is entered by the user and is sent to an information provider via the internet. The requested information is sent back by the information provider.

### PROBLEMS TO BE SOLVED BY THE INVENTION

However, with the system disclosed in Japanese Laid-Open Patent Publication No. 7-115474, supra, audio/image information for all published newspaper articles needs to be provided and stored in the database at the publisher, thereby requiring a very large database capacity.

The present invention has been made in view of the above, and has an object to provide a multimedia information provision system, a multimedia information provision method, a user terminal, a main server and an associated server that can suitably be used in the provision of multimedia information according to page information.

### DISCLOSURE OF THE INVENTION

According to a first aspect of the invention, there is provided a multimedia information provision system, comprising a first server, a second server, and a user terminal connected to one another via an information communication network, for providing, to the user terminal, multimedia information associated with page information input to the user terminal, wherein: the user terminal includes a reading section for reading page information from a page; the first server includes a first database storing page information addresses associated with page information, and a retrieval section for retrieving, from the first database, a page information address associated with the page information that has been read by the reading section of the user terminal and transmitted from the user terminal to the first server; and the second server includes a second database storing multimedia information associated with the page information addresses stored in the first database, and in response to the page information address that has been retrieved by the retrieval section and transmitted to the second server from the first server transmits, from the second database to the user terminal, multimedia information associated with said page information address. Thus, the object set forth above is achieved.

It is preferred that the first server further includes an analysis section for analyzing the page information transmitted from the user terminal to obtain text information, and the retrieval section retrieves the page information address based on the text information obtained by the analysis section.

The user terminal may include a display section for displaying the multimedia information transmitted from the second server.

The reading section provided in the user terminal may be a scanner for scanning the page to read the page information as image information.

In a preferred embodiment, the first server is owned by a newspaper company, the second server is owned by a television station, and the user terminal is owned by a newspaper subscriber; and the reading section provided in the user terminal reads the page information from a page of a newspaper.

The user terminal may include a storage section for saving the multimedia information transmitted from the second server.

The user terminal may include an output section for externally outputting the multimedia information transmitted from the second server.

The second server may transmit, from the second database to the first server, the multimedia information associated with the page information address retrieved by the retrieval section of the first server.

The multimedia information stored in the second database of the second server may include image information and/or audio information.

Another multimedia information provision system of the present invention is a multimedia information provision system according to the first aspect, wherein the reading section of the user terminal includes a scanner for scanning a page of a newspaper to read image information of the newspaper article; the first database is an article address database storing article addresses associated with newspaper articles, the first server includes an analysis section for analyzing the image information that has been read by the scanner and transmitted from the user terminal to obtain text information, and the retrieval section is arranged to retrieve, from the article address database, an article address based on the text information obtained by the analysis section; the second database is a multimedia information database storing multimedia information associated with the article addresses stored in the article address database, and in response to the article address that has been retrieved by the retrieval section and transmitted to the second server from the first server transmits, from the multimedia information database to the user terminal, multimedia information associated with said article address; and the user terminal further includes a display section for displaynig the multimedia information transmitted from the second server. Thus, the object set forth above is achieved.

In a preferred embodiment, the first server is owned by a newspaper company, the second server is owned by a television station, and the user terminal is owned by a newspaper subscriber.

The multimedia information stored in the multimedia information database of the second server may include image information and/or audio information.

The user terminal may include a transmission/reception section for transmitting/receiving information to/from the first server and the second server; the first server may include a transmission/reception section for transmitting/receiving information to/from the user terminal and the second server; and the second server may include a transmission/reception section for transmitting/receiving information to/from the user terminal and the first server.

According to a second aspect of the invention, there is provided a multimedia information provision method, using a first server, a second server and a user terminal connected to one another via an information communication network, for providing, to the user terminal, multimedia information associated with page information input to the user terminal, the method comprising: a reading step of reading page information from a page, at the user terminal; a retrieval step of retrieving, from a first database, of the first server, storing page information addresses associated with page information, a page information address associated with the page information that has been read at the user terminal in the reading step; and a multimedia information transmission step of transmitting, from a second database storing multimedia, of the second server, information associated with the page information addresses stored in the first database to the user terminal, multimedia information associated with the page information address that has been retrieved in the retrieval step and has been transmitted to the second server from the first server. Thus, the object set forth above is achieved.

It is preferred that the method further includes an analysis step of analyzing the page information that has been read in the reading step to obtain text information, at the first server; and a page information address is retrieved based on the text information obtained in the analysis step in the retrieval step.

The method may further include a display step of displaying the multimedia information transmitted from the second server, at the user terminal.

According to a third aspect of the invention, there is provided a user terminal connected to a main server and an associated server via an information communication network, comprising: a reading section for reading page information from a page; a transmission section for transmitting page information that has been read by the reading section to the main server; and a reception section for receiving multimedia information from the associated server, wherein: the main server includes a first database storing page information addresses associated with page information and a retrieval section for retrieving, from the first database, a page information address associated with the page information that has been read by the reading section and transmitted from the transmission section, the associated server includes a second database storing multimedia information associated with the page information addresses stored in the first database and in response to the page information address that has been retrieved by the retrieval section and transmitted to the associated server from the main server transmits to the reception section of the user terminal multimedia information associated with said page information address. Accordingly, the above object is attained.

According to a fourth aspect of the invention, there is provided a main server connected to a user terminal and an associated server via an information communication network, the user terminal including a reading section for reading page information from a page, the main server comprising: a first database storing page information addresses associated with page information; a reception section for receiving page information that has been read from a page by the reading section and transmitted from said user terminal; a retrieval section for retrieving, from the first database, a page information address associated with the page information that has been received by the reception section; and a transmission section for transmitting to the associated server the page information address that has been retrieved by the retrieval section, wherein: the associated server includes a second database storing multimedia information associated with the page information addresses stored in the first database and in response to the page information address that has been retrieved by said retrieval section and transmitted from the transmission section transmits to the user terminal multimedia information associated with said page information address. Accordingly, the above object is attained.

According to a fifth aspect of the invention, there is provided an associated server connected to a user terminal and a main server via an information communication network, the user terminal including a reading section for reading page information from a page, the main server including a first database storing page information addresses associated with page information and a retrieval section for retrieving, from the first database, a page information address associated with the page information that has been read from a page by the reading section of the user terminal and transmitted from the user terminal to the main server, the associated server comprising: a second data base storing multimedia information associated with the page information addresses stored in the first database; a reception section for receiving the page information address that has been retrieved by the retrieval section from the main server; and a transmission section for transmitting to the user terminal, in response to the page information address that has been received by the reception section, multimedia information associated with said page information address. Accordingly, the above object is attained.

### EFFECTS OF THE INVENTION

Thus, the present invention provides a multimedia information provision system, a multimedia information provision method, a user terminal, a main server and an associated server that can suitably be used in the provision of multimedia information according to page information.

In the multimedia information provision system of the present invention, a page information address associated with the page information read by the user terminal is retrieved from the first database of the first server, and multimedia information associated with the retrieved page information address is transmitted from the second database of the second server to the user terminal. Multimedia information associated with page information is provided to the user as described above, whereby it is possible to make the understanding easier by the multimedia information including image information and audio information without detracting from the scannability and the portability of the page information. Moreover, it is not necessary that multimedia information associated with page information is pre-stored in the first database and it is not necessary to ensure a large capacity for the first database, whereby it is possible to desirably provide multimedia information according to page information. The present invention is particularly suitable for a case where it is not necessary to newly (specially) prepare multimedia information associated with each page information address, i.e., multimedia information associated with page information.

### BRIEF DESCRIPTION OF THE DRAWINGS

FIG. **1** is a diagram schematically illustrating a multimedia information provision system **100** according to an embodiment of the present invention.
FIG. **2** is a flow chart illustrating a multimedia information provision method using the multimedia information provision system **100**.
FIG. **3** is a block diagram schematically illustrating a user terminal **30** provided in the multimedia information provision system **100.**
FIG. **4** is a block diagram schematically illustrating a first server **10** provided in the multimedia information provision system **100**.
FIG. **5** is a block diagram schematically illustrating a second server **20** provided in the multimedia information provision system **100**.
FIG. **6** is a flow chart illustrating a billing method that can be used when providing multimedia information by using the multimedia information provision system **100**.
FIG. **7** is a flow chart illustrating the data flow for the user terminal **30** at a subscriber's residence
FIG. **8** is a flow chart illustrating the data flow for the first server **10** at a newspaper company.
FIG. **9** is a flow chart illustrating the data flow for the second server **20** at a television station.

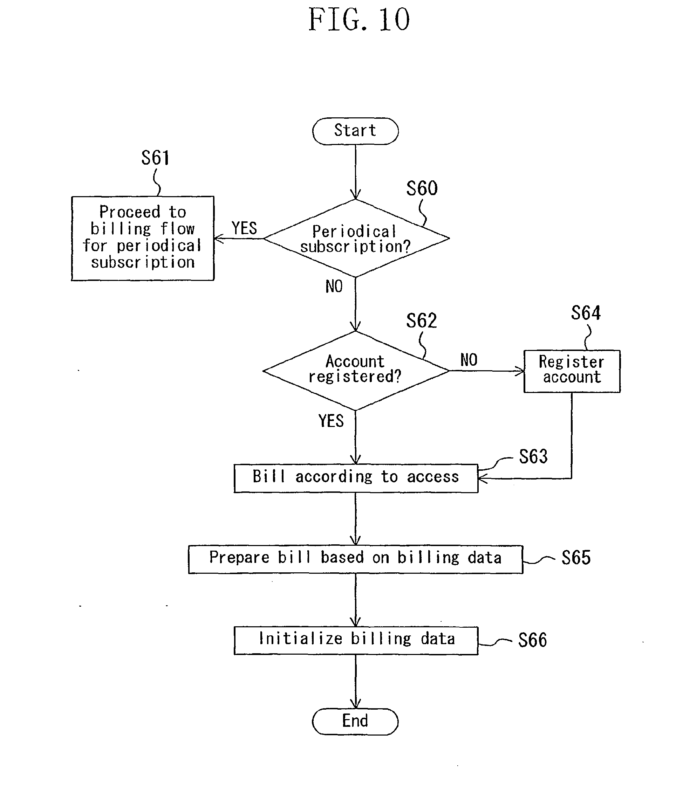

FIG. **10** is a flow chart illustrating another billing method that can be used when providing multimedia information by using the multimedia information provision system **100**.
FIG. **11** is a cross-sectional view schematically illustrating a portion corresponding to one pixel of a display device **200** that can suitably be used as the user terminal **30**.
FIG. **12** is a plan view schematically illustrating a portion corresponding to one pixel of the display device **200**.
FIG. **13** is a table showing samples of combinations of owners of the first server, the second server and the user terminal, and types of multimedia information.

### BEST MODE FOR CARRYING OUT THE INVENTION

Embodiments of the present invention will now be described with reference to the drawings. Note that while an embodiment where the multimedia information provision system and the multimedia information provision method of the present invention are applied to newspaper articles will be described, the present invention is not limited to the following embodiment.

### EMBODIMENT 1

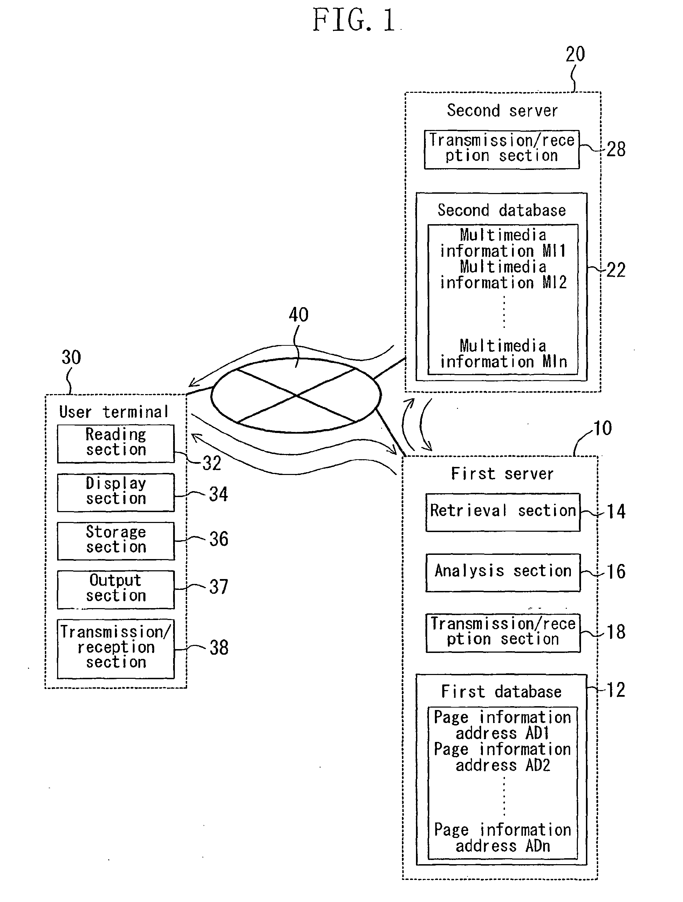

First, the configuration of a multimedia information provision system **100** of an embodiment of the present invention will be described with reference to FIG. **1**. FIG. **1** is a diagram schematically illustrating the multimedia information provision system **100**.

The multimedia information provision system **100** includes a first server **10**, a second server **20** and a user terminal **30** connected to one another via an information communication network **40**, and provides multimedia information to the user (user terminal) according to the page information input to the user terminal **30**. The information communication network **40** is the Internet, for example, and the multimedia information transmitted/received via the information communication network **40** typically includes image information and/or audio information. Note that a case where the first server **10** is owned by a newspaper company, the second server **20** is owned by a television station, and the user terminal **30** is owned by a newspaper subscriber will be described herein.

The user terminal **30** includes a reading section **32** for reading the page information from a page. Herein, the user terminal **30** is owned by the newspaper subscriber, and the reading section **32** reads the page information (i.e., a newspaper article) from a page of the newspaper. The reading section **32** is, for example, a scanner that scans (typically, scans optically) the page to read the page information as image information. Of course, an electronic component (e.g., an IC chip) or a barcode including information for identifying the page information may be provided on the page in advance, and a device capable of reading information therefrom (e.g., a barcode reader) may be used as the reading section **32**. When a scanner is used as the reading section **32**, it is not necessary that an electronic component or a barcode is provided on the page in advance, whereby it is possible to reduce the cost therefor and to efficiently use the limited page space. A preferred embodiment of the user terminal **30** will be described later.

The first server **10** includes a first database **12** and a retrieval section **14**. In the present embodiment, the first server **10** further includes an analysis section **16**. The first server **10** is typically a computer.

The first database **12** stores page information addresses AD1 to ADn associated with page information. A page information address is an identifier indicating a position (storage location) in a second database **22** to be described later of the multimedia information associated with the read page information. The first database **12** is obtained typically by storing page information addresses in a storage device such as a hard disk drive. Moreover, the first database **12** herein is an article address database storing article addresses associated with newspaper articles.

The retrieval section **14** retrieves, from the first database **12**, a page information address associated with the page information that has been read by the reading section **32** and transmitted from the user terminal **30**. In the present embodiment, the first server **10** includes the analysis section **16** for analyzing the page information transmitted from the user terminal **30** to obtain text information, and the retrieval section **14** retrieves the page information address based on the text information obtained by the analysis section **16**. More specifically, the retrieval section **14** retrieves the page information address by, for example, associative retrieval based on the text information. That is, the retrieval section **14** associates the text information with the information contents, thereby identifying the storage location.

The second server **20** includes the second database **22** storing multimedia information MI1 to MIn associated respectively with the page information addresses AD1 to ADn stored in the first database **12**. The multimedia information typically includes image information and/or audio information, and the image information is moving image information and/or still image information. The second database **22** typically stores the multimedia information in a storage device (preferably, a high-capacity storage device) such as a hard disk drive. Moreover, the second database **22** herein is a multimedia information database storing multimedia information associated with article addresses stored in the article address database.

The second server **20** transmits, from the second database **22** to the user terminal **30**, multimedia information associated with the page information address (article address) that has been retrieved by the retrieval section **14** and transmitted from the first server **10**. The multimedia information may be transmitted from the second server **20** to the user terminal **30** either directly or indirectly. Where it is transmitted indirectly, it may be transmitted from the second server **20** to the user terminal **30** via the first server **10**, for example. That is, the second server **20** may first transmit the multimedia information to the first server **10**, and the first server **10** may then transmit the multimedia information to the user terminal **30**. Alternatively, the second server **20** may transmit the multimedia information both to the first server **10** and to the user terminal **30** at the same time.

The user terminal **30**, to which the multimedia information is transmitted, herein includes a display section **34**, a storage section **36** and an output section **37**.

The display section **34** displays the multimedia information transmitted from the second server **20**. The display section **34** may be, for example, a flat display panel such as a liquid crystal display device or a CRT.

The storage section **36** saves (stores) the multimedia information. The storage section **36** may be a storage device such as a memory or a hard disk drive.

The output section **37** externally outputs the multimedia information. The output section **37** may electrically output the multimedia information to an external device or an external recording medium, or may output the image information included in the multimedia information by printing it on paper.

Note that while the user terminal **30** herein includes the display section **34**, the storage section **36** and the output section **37**, they may alternatively be omitted. Note however that it is preferred that a component through which the user can make any use of the multimedia information is provided, and it is preferred that at least one of the display section **34** and the output section **37** is provided. Moreover, the user terminal **30** may include an audio output section (e.g., a loudspeaker) for outputting audio information included in the multimedia information, instead of the display section **34**, or in addition to the display section **34**.

Moreover, the first server **10**, the second server **20** and the user terminal **30** typically include a transmission/reception section **18** for transmitting/receiving information to/from the user terminal **30** and the second server **20**, a transmission/reception section **28** for transmitting/receiving information to/from the user terminal **30** and the first server **10**, and a transmission/reception section **38** for transmitting/receiving information to/from the first server **10** and the second server **20**, respectively, thereby allowing for transmission/reception of information therebetween.

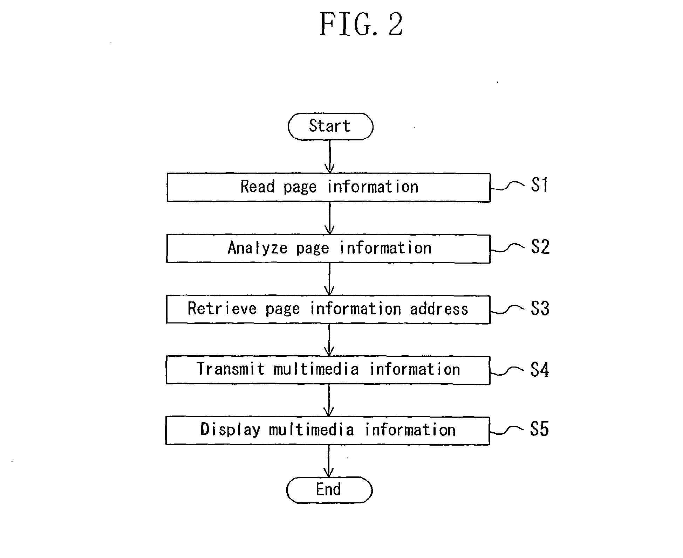

Next, a flow of the multimedia information provision system **100** will be described with reference to **FIG. 2.** FIG. **2** is a flow chart illustrating a flow of the multimedia information provision system **100** as described above, i.e., a multimedia information provision method using the multimedia information provision system **100**.

First, in the user terminal **30**, page information is read from a page (reading step S1).

Next, in the first server **10**, the page information read in reading step S1 is analyzed to obtain text information (analysis step S2).

Then, in the first server **10**, a page information address associated with the page information read in reading step S1 is retrieved from the first database **12** (retrieval step S3). In this step, the page information address is retrieved based on the text information obtained in analysis step S2.

Then, in the second server **20**, multimedia information associated with the page information address retrieved in retrieval step S3 is transmitted from the second database **22** to the user terminal **30** (multimedia information transmission step S4).

Finally, in the user terminal **30**, the multimedia information transmitted from the second server **20** is displayed (display step S5).

Note that if the page information read by the user terminal **30** does not require an analysis, analysis step S2 may be omitted. For example, when the user terminal **30** includes a barcode reader as the reading section **32**, information for identifying page information of a page can be read from a barcode attached to the page, and a page information address can be retrieved based on the information.

Moreover, when the user terminal **30** includes the storage section **36** as illustrated in FIG. **1**, there may be provided a saving step of saving (storing) multimedia information transmitted from the second server **20** in the user terminal **30**.

Furthermore, when the user terminal **30** includes the output section **37**, there may be provided an output step of externally outputting multimedia information transmitted from the second server **20** from the user terminal **30**.

Moreover, when the user terminal **30** includes the audio output section, there may be provided an audio output step of outputting audio information included in multimedia information.

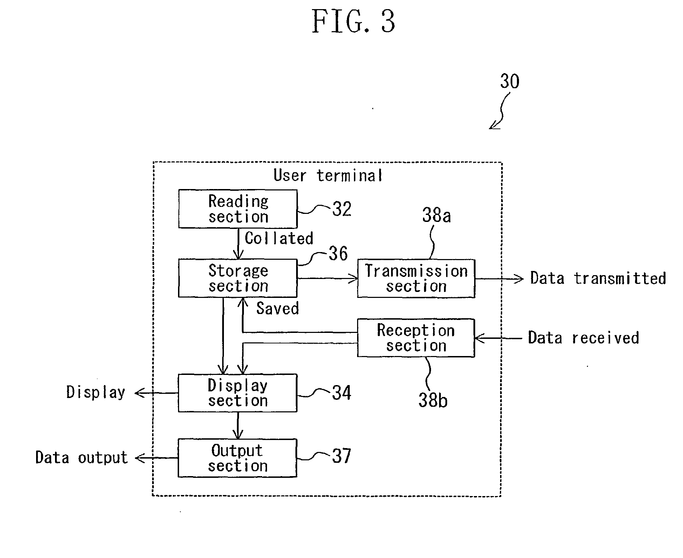

Next, an example of the relationship between components of the user terminal **30**, the first server **10** and the second server **20** and the flow of data (information) therein will be described with reference to FIG. **3**, FIG. **4** and FIG. **5**. Note that the transmission/reception sections **18**, **28** and **38** illustrated in FIG. **1** are shown in FIG. **3**, FIG. **4** and FIG. **5** as a transmission section **18a** and a reception section **18b**, a transmission section **28a** and a reception section **28b**, and a transmission section **38a** and a reception section **38b**, respectively.

First, an example of the relationship between components of the user terminal **30** and the flow of data therein will be described with reference to FIG. **3**. First, page information is read by the reading section **32**, and then collated with the multimedia information saved in the storage section **36**. When multimedia information associated with the page information is not saved in the storage section **36**, data (page information) is transmitted from the transmission section **38a** to the first server **10**, and data (multimedia information) from the second server **20** is received at the reception section **38b**. The received data is displayed on the display section **34** and output from the output section **37** while being saved in the storage section **36**. On the other hand, if it is determined, when the page information read by the reading section **32** is collated with multimedia information saved in the storage section **36**, that multimedia information associated with the page information is already saved in the storage section **36**, the multimedia information is displayed on the display section **34** and output from the output section **37**, without transmitting/receiving data to/from the first server **10** and the second server **20**.

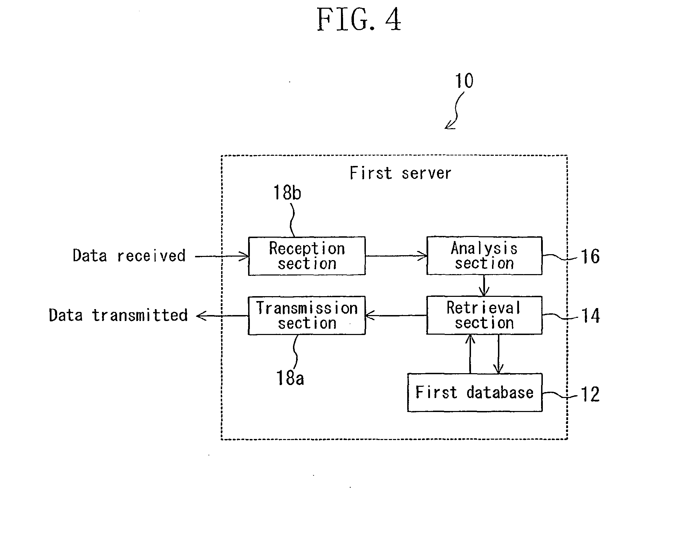

Next, the first server **10** will be described with reference to FIG. **4**. First, data (page information) from the user terminal **30** is received at the reception section **18b**. Next, the received data is analyzed by the analysis section **16** to obtain text information. Then, the retrieval section **14** retrieves page information address associated with the page information from the first database **12** based on the analyzed text information. Then, the retrieved page information address (data) is transmitted from the transmission section **18a** to the second server **20**.

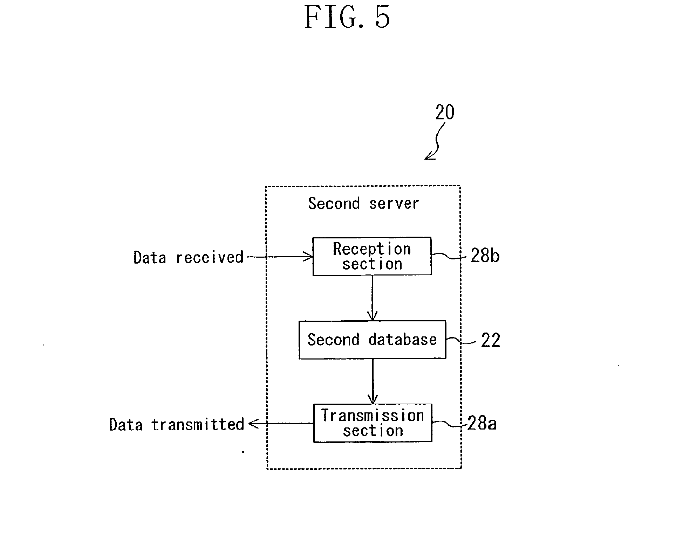

Next, the second server **20** will be described with reference to FIG. **5**. First, data (page information address) from the first server **10** is received at the reception section **28b**. Next, multimedia information (data) associated with the received page information address is transmitted from the second database **22** to the user terminal **30** via the transmission section **28a**.

As described above, in the multimedia information provision system **100** of the present invention, page information address associated with page information read by the user terminal **30** is retrieved from the first database **12** of the first server **10**, and multimedia information associated with the retrieved page information address is transmitted from the second database **22** of the second server **20** to the user terminal **30**. Multimedia information associated with page information is provided to the user as described above, whereby it is possible to make the understanding easier by the multimedia information including image information and audio information without detracting from the scannability and the portability of the page information. Moreover, it is not necessary that multimedia information associated with page information is pre-stored in the first database **12** and it is not necessary to ensure a large capacity for the first database **12**, whereby it is possible to desirably provide multimedia information according to page information.

The present invention can suitably be used in a case where it is not necessary to newly (specially) prepare multimedia information associated with each page information address, i.e., multimedia information associated with page information. For example, the present invention can suitably be used in a case where the first server **10** is owned by a newspaper company, the second server **20** is owned by a television station, and the user terminal **30** is owned by a newspaper subscriber, as in the present embodiment. It is often the case that a television station already has multimedia information associated with newspaper articles. Therefore, it is not necessary to newly prepare multimedia information associated with page information. Thus, it is possible to reduce the cost of preparing multimedia information. Moreover, it is often the case that a television station already has multimedia information associated with newspaper articles at the time when a newspaper is delivered to the user. Therefore, multimedia information associated with page information can be provided immediately. Note that while a case where there is only one second server **20** has been illustrated in the description above, there may be a plurality of second servers **20**, which may be owned by a plurality of television stations.

When the user terminal **30** includes the display section **34**, the user can make use of the provided multimedia information by displaying it. Moreover, when the user terminal **30** includes the audio output section, the user can make use of audio information included in multimedia information by outputting it.

When the user terminal **30** includes the storage section **36**, multimedia information can be saved (stored), whereby it is possible to use the same multimedia information repeatedly without having to access the network again. Moreover, when the user terminal **30** includes the output section **37**, multimedia information can be externally output, whereby the multimedia information can be displayed or saved with separate equipment.

With the configuration where the first server **10** includes the analysis section **16** for analyzing page information transmitted from the user terminal **30** to obtain text information and the retrieval section **14** retrieves a page information address based on the text information obtained by the analysis section **16**, it is not necessary that information for identifying page information is attached to a page in advance, whereby it is possible to reduce the cost of attaching such information to the page and to efficiently use the limited page space. Such a configuration as described above can easily be realized by, for example, using a scanner as the reading section **32**. Note that similar effects can be obtained with a configuration where the analysis section is included in the user terminal **30**. However, there are typically a large number of user terminals **30** for one first server **10**. Therefore, by employing a configuration where the analysis section **16** is included in the first server **10** as in the present embodiment, it is possible to simplify the overall system configuration.

As already described above, the second server **20** may transmit multimedia information to the first server **10**. In such a case, the first server **10** may store the multimedia information therein so that when the user requests the same multimedia information, the multimedia information can be provided to the user without having to access the second server **20**. Thus, in a case where the same multimedia information is requested by a large number of users, it is possible to significantly reduce the number of times the information communication network is accessed, thus reducing the load on the information communication network.

Next, a billing method that can be used when providing multimedia information by using the multimedia information provision system **100** of the present invention will be described. A case where the first server **10** is owned by a newspaper company and the second server **20** is owned by a television station will be described in the following description.

First, a possible billing method is a method where the user, i.e., a newspaper subscriber, makes a contract with the newspaper company and pays a rate to the newspaper company, while the newspaper company makes a contract with the television station and pays a rate to the television station.

In such a case, specifically, the newspaper subscriber pays the rate to the newspaper company in one of methods (1) to (3) below, for example.
(1) Pays a fixed rate irrespective of the amount of information.
(2) Pays a predetermined rate at the time of making the contract and pays an additional rate according to the amount of information (e.g., 10 yen per 100 Mbits).
(3) Pays a rate according to the amount of information. Typically, the rate paid per unit amount of information is higher than that in the case (2) (e.g., 20 yen per 100 Mbits).

Moreover, the newspaper company may pay a rate to the television station in one of the methods (1) to (3) described above, or may share the rate paid by the subscriber with the television station at a predetermined ratio (e.g., 1:1).

Moreover, another possible billing method is a method where the newspaper subscriber makes a contract with the newspaper company and with the television station, and pays a rate both to the newspaper company and to the television station.

In such a case, the newspaper subscriber pays a rate in one of the methods (1) to (3) described above. Specifically, the newspaper subscriber pays a rate to the newspaper company and to the television station in one of the following methods (i) to (iii).
(i) The total rate paid by the subscriber is shared by the newspaper company and the television station at a predetermined ratio (the cases (1) to (3)).
(ii) The subscriber pays a predetermined rate to the newspaper company at the time of making the contract and further pays an additional rate according to the amount of information to the television station (the case (2)).
(iii) The predetermined rate paid by the subscriber at the time of making the contract is shared by the newspaper company and the television station at a predetermined ratio, and the subscriber further pays an additional rate according to the amount of information to the television station (the case (2)).

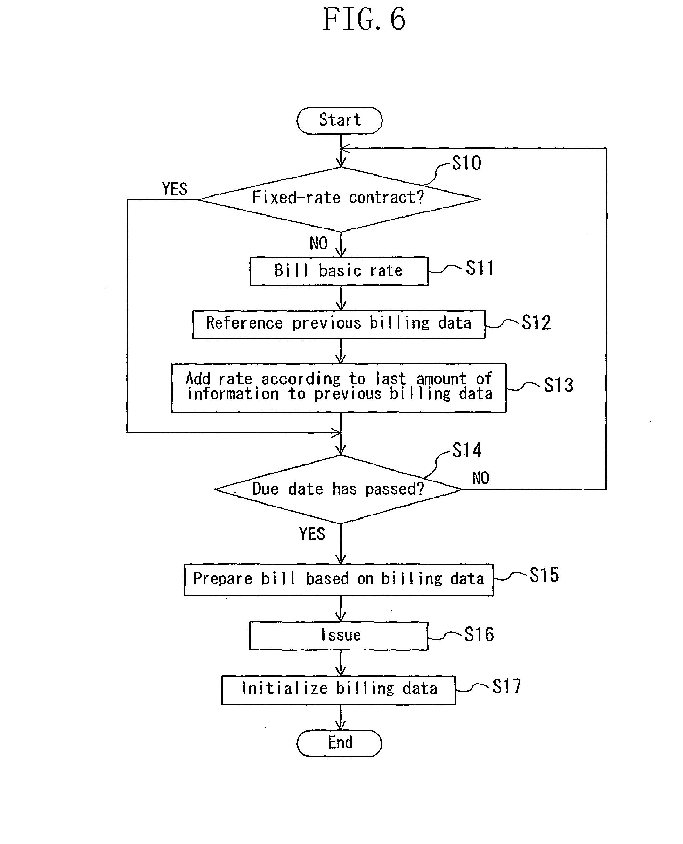

FIG. **6** illustrates the flow of an example of the billing method. When multimedia information is provided to the user, it is first determined whether or not the contract is a fixed-rate contract (the case (1) above) (S10). If it is not a fixed-rate contract, a basic rate is billed (S11) and the previous billing data is referenced (S12), after which a rate according to the last amount of information provided is added to the previous billing data (S13). Next, it is determined whether or not the billing due date has passed (S14). Note that the determination whether or not the billing due date has passed is made (S14) even if it is determined that the contract is a fixed-rate contract (S10).

If the billing due date has passed, a bill is prepared based on the billing data (S 15) and the bill is issued (S16), after which the billing data is initialized (S17). On the other hand, if the billing due date has not passed, the process returns to step S10 of determining whether or not the contract is a fixed-rate contract.

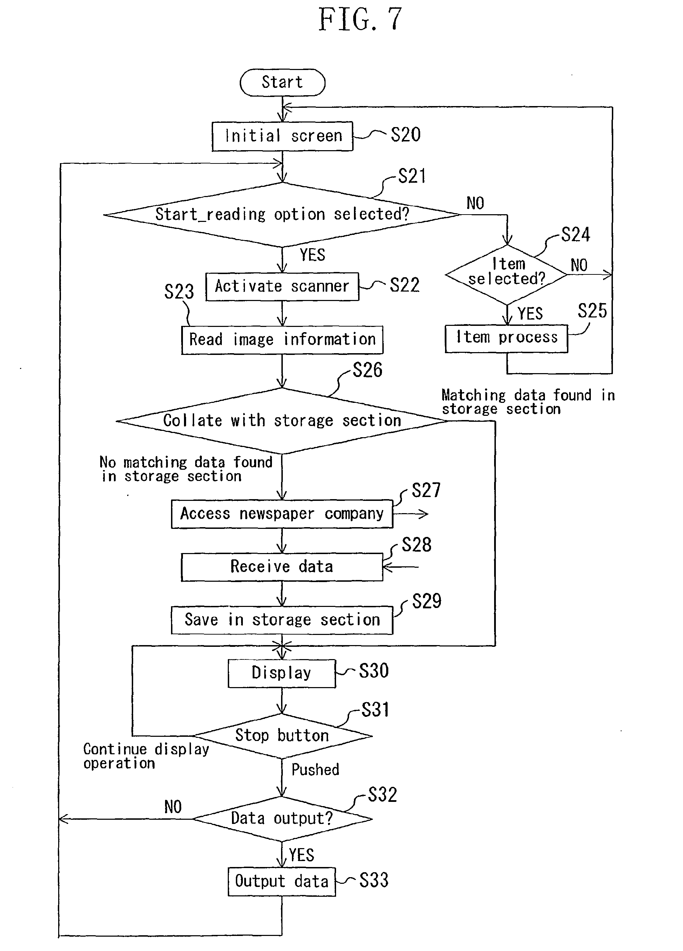

Now, the data flow, including the flow of the billing method, will be described for the user terminal **30** at the subscriber's residence, the first server **10** at the newspaper company and the second server **20** at the television station, with reference to FIG. **7**, FIG. **8** and FIG. **9**. Note that a case where the user terminal **30** includes a scanner as the reading section **32** will be described.

First, the data flow for the user terminal **30** at the subscriber's residence will be described with reference to FIG. **7**.

At first, an initial screen is displayed on the display section **34** (S20). When the start_reading option is selected (S21), the scanner is activated (S22) to read the image information of a newspaper article (S23). Note that if the start_reading option is not selected, it is then determined whether items are selected or not selected (S24). If an item is selected, the process of the selected item is performed (S25), and if no item is selected, the process returns to the initial state (S20). An item to be selected may be, for example, displaying or outputting previously obtained data, managing previously obtained data (retrieval or deletion of data saved in the storage section **36**), displaying the billing information, etc.

After the image information is read (S23), it is collated with data (multimedia information) saved in the storage section **36** (S26). If no data associated with the image information is saved in the storage section **36**, the terminal accesses the newspaper company (the first server **10** at the newspaper company) to transmit the data (image information) to the newspaper company (S27). Then, data (multimedia information) is received from the television station (the second server **20** at the television station) (S28), and the received data is saved in the storage section **36** (S29).

Then, the data (moving image data or still image data) from the television station is displayed on the display section **34** (S30). Note that if it is determined in the image information collation step (S26) that data associated with the image information is already saved in the storage section **36**, the data is displayed without transmitting/receiving data to/from the newspaper company or the television station.

The display operation continues until a stop button is pressed. When the stop button is pressed (S31), the user selects whether or not to output the data (S32). If the user selects to output the data, the data is externally output from the output section **37** (S33), after which the process returns to the initial state (S20). Also when the user selects not to output the data, the process returns to the initial state (S20).

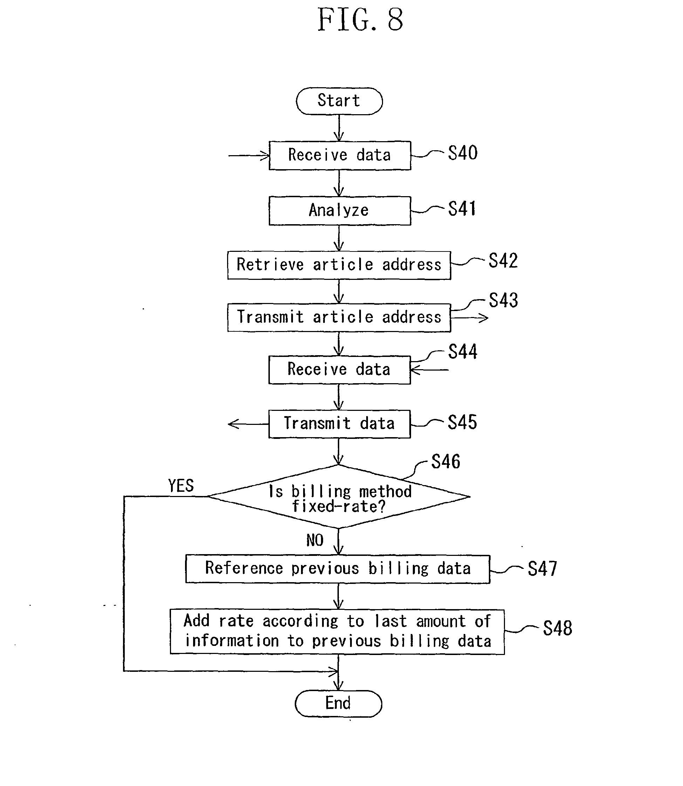

Next, the data flow for the first server **10** at the newspaper company will be described with reference to FIG. **8**. A case where multimedia information from the television station is transmitted to the user terminal **30** at the subscriber's residence via the newspaper company is illustrated.

First, data (image information) is received from the user terminal **30** at the subscriber's residence (S40), and the received data is analyzed by the analysis section **16** to obtain text information (S41).

Then, the retrieval section **14** retrieves an article address associated with the image information from the article address database (the first database **12**) based on the analyzed text information (S42), and the retrieved article address is transmitted to the television station (the second server **20** at the television station) (S43).

Then, multimedia information (data) is received from the multimedia information database (the second database **22**) of the second server **20** at the television station (S44), and the multimedia information is transmitted to the user terminal **30** at the subscriber's residence (S45).

Then, it is determined whether or not the contract is a fixed-rate contract (S46). If it is not a fixed-rate contract, the previous billing data is referenced (S47), after which a rate according to the last amount of information provided is added to the previous billing data (S48). If it is determined that the contract is a fixed-rate contract, the process directly goes to end.

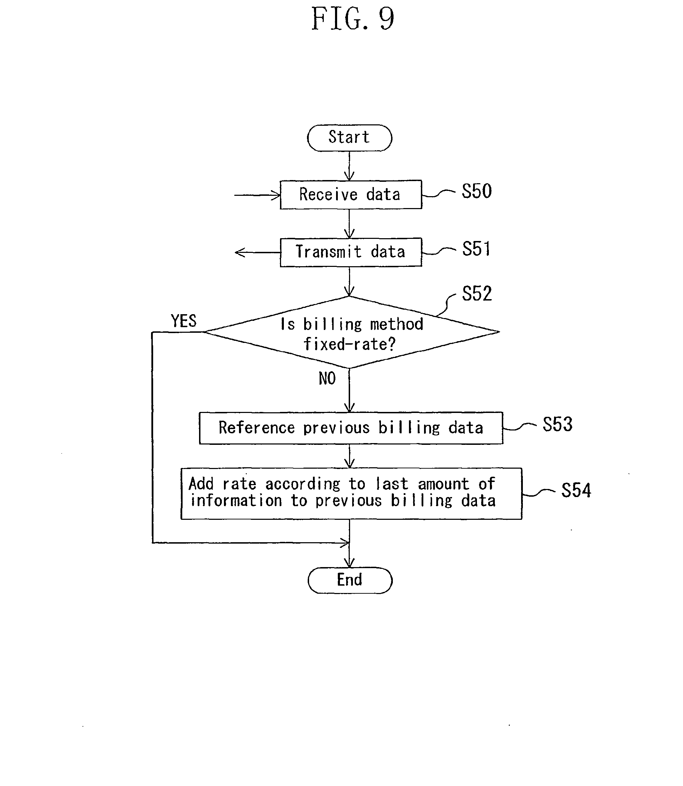

Next, the data flow for the second server **20** at the television station will be described with reference to FIG. **9**.

First, data (article address) is received from the first server **10** at the newspaper company (S50). Next, multimedia information (data) associated with the received article address is transmitted from the multimedia information database (the second database **22**) to the user terminal **30** at the subscriber's residence or the first server **10** at the newspaper company (S51).

Then, it is determined whether or not the contract is a fixed-rate contract (S52). If it is not a fixed-rate contract, the previous billing data is referenced (S53), after which a rate according to the last amount of information provided is added to the previous billing data (S54). If it is determined that the contract is a fixed-rate contract, the process directly ends.

The description so far has been directed primarily to billing methods where the subscription is a periodical subscription. **FIG**. **10** illustrates the flow of an example of a billing method where the subscription is a non-periodical subscription.

After multimedia information is provided to the user, it is first determined whether or not the subscription is a periodical subscription (S60). If it is a periodical subscription, the process proceeds to a billing flow for a periodical subscription as illustrated in FIG. **6** (S61). If it is not a periodical subscription, i.e., if it is a non-periodical subscription, it is determined whether or not an account of the subscriber has been registered (S62). If an account has been registered, it is billed according to the access made by the subscriber (S63). An "account" as used herein refers to one that is opened at a financial institution, or the like, and to which a rate can be charged, e.g., a bank account. If an account has not been registered, billing is done after an account is registered (S64).

The methods of billing according to the access may be, for example, billing according to the amount of data in the multimedia information provided for each access, billing according to the number of times access is made, or billing according to the contents/type of the information content. After billing according to the access, a bill is prepared based on the billing data (S65), after which the billing data is initialized (S66).

The description so far has been directed to a case where the first server **10** is owned by a newspaper company, the second server **20** is owned by a television station, and the user terminal **30** is owned by a newspaper subscriber, wherein multimedia information according to page information (a news article, etc.) of a newspaper is provided. Of course, the present invention is not limited to this.

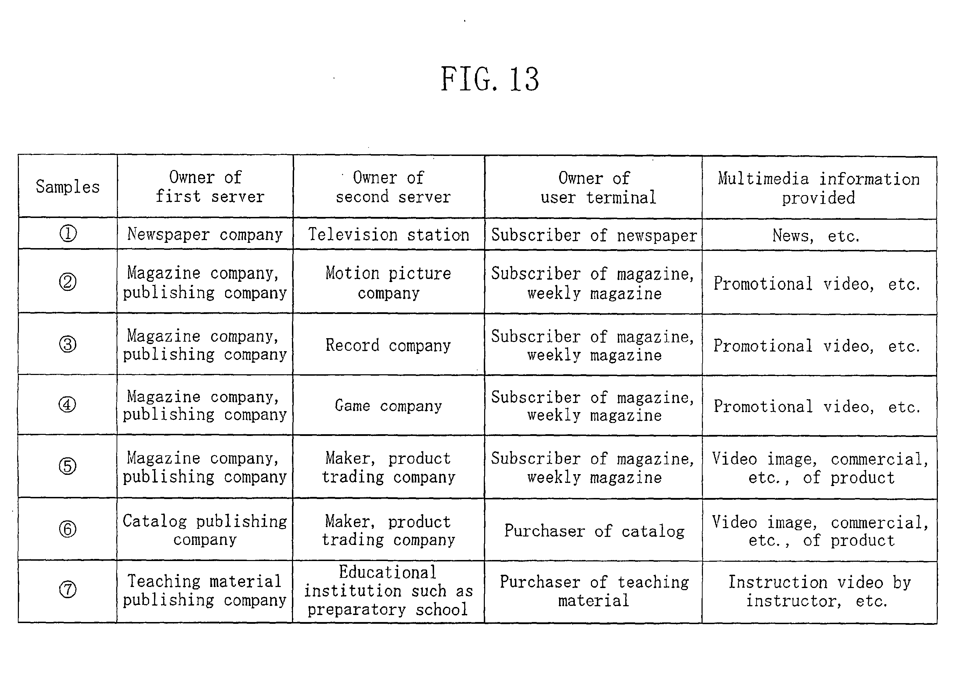

FIG. **13** shows samples of combinations of owners of the first server **10**, the second server **20** and the user terminal **30**, and types of multimedia information.

As already described above, Sample (1) is a case where the first server **10** is owned by a newspaper company, the second server **20** is owned by a television station, and the user terminal **30** is owned by a newspaper subscriber, wherein news, or the like, is provided.

Samples (2), (3), (4) and (5) are cases where the first server **10** is owned by a magazine company or a publishing company publishing a magazine or a weekly magazine, and the user terminal **30** is owned by a subscriber of the magazine or the weekly magazine.

In Sample (2), the second server **20** is owned by a motion picture company, and multimedia information relating to a motion picture appearing on the magazine or the weekly magazine (e.g., a promotional video thereof) is provided to the subscriber.

In Sample (3), the second server **20** is owned by a record company, and multimedia information relating to a CD or a music video appearing on the magazine or the weekly magazine (e.g., a promotional video thereof) is provided to the subscriber.

In Sample (4), the second server **20** is owned by a game company, and multimedia information relating to a game appearing on the magazine or the weekly magazine (e.g., a promotional video thereof) is provided to the subscriber.

In Sample (5), the second server **20** is owned by a product maker or a product trading company, and multimedia information relating to a product appearing on the magazine or the weekly magazine (e.g., a video image or a commercial of the product) is provided to the subscriber.

Sample (6) is a case where the first server **10** is owned by a catalog publishing company publishing catalogs, etc., and the second server **20** is owned by a product maker or a product trading company that makes or trades a product appearing on a catalog. In this case, the user terminal is owned by a purchaser of the catalog, and multimedia information relating to a product appearing on the catalog (e.g., a video image or a commercial of the product) is provided to the purchaser of the catalog.

Sample (7) is a case where the first server **10** is owned by a teaching material publishing company publishing a textbook, a reference book, etc., and the second server **20** is owned by an educational institution such as a preparatory school. In this case, the user terminal is owned by a purchaser of a teaching material, and multimedia information relating to the contents of the teaching material (e.g., an instruction video by an instructor of the educational institution) is provided to the purchaser of the teaching material.

### USER TERMINAL

A preferred embodiment of the user terminal **30** for reading page information and displaying multimedia information will be described.

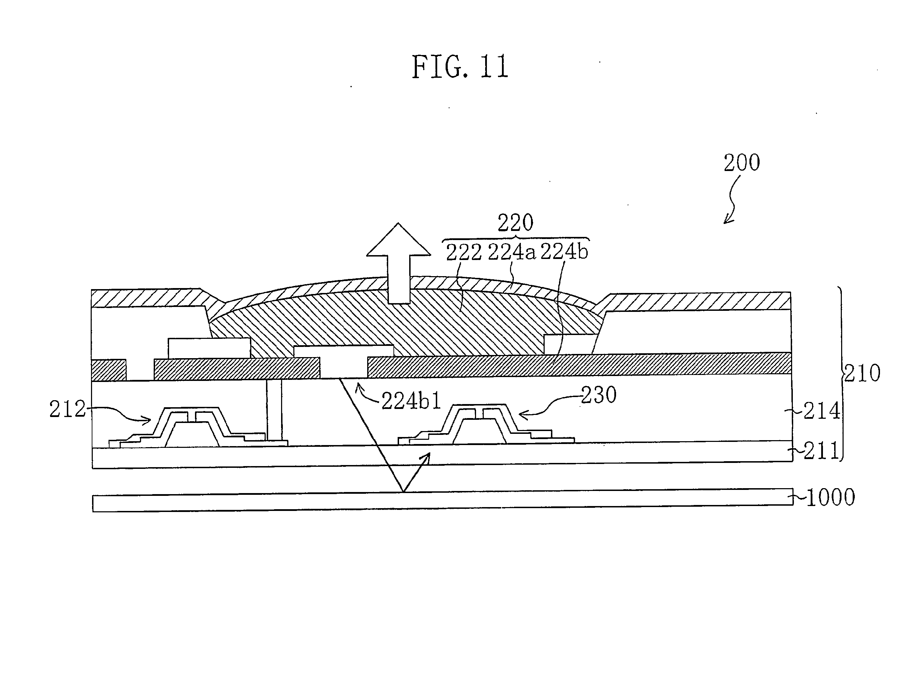

A display device **200** illustrated in FIG. **11** has both a display function of a display device and a image reading function of a scanner, and can suitably be used as the user terminal **30**.

The structure of the display device **200** will now be described with reference to FIG. **11**. The display device **200** includes a plurality of pixels, and FIG. **11** is a cross-sectional view schematically illustrating a portion corresponding to one pixel of the display device **200**. The plurality of pixels are typically arranged in a matrix pattern.

The display device **200** includes a display panel **210**, including an organic EL element **220** as a light-emitting element for each of the plurality of pixels and a light-receiving element **230** provided for each of the plurality of pixels. Note that while the light-emitting element herein is an organic EL element, it may alternatively be an inorganic EL element or an electrochemical light-emitting element.

The display panel **210** displays an image by using light emitted from the organic EL element **220** toward the front side of the panel (toward the viewer: in the upward direction in FIG. **11**).

The light-receiving element **230** receives a portion of light emitted from the organic EL element **220** toward the rear side of the panel (away from the viewer: in the downward direction in FIG. **11**) that is reflected by an illuminated object (e.g., a display medium such as a printed matter) **1000** provided on the rear side of the panel.

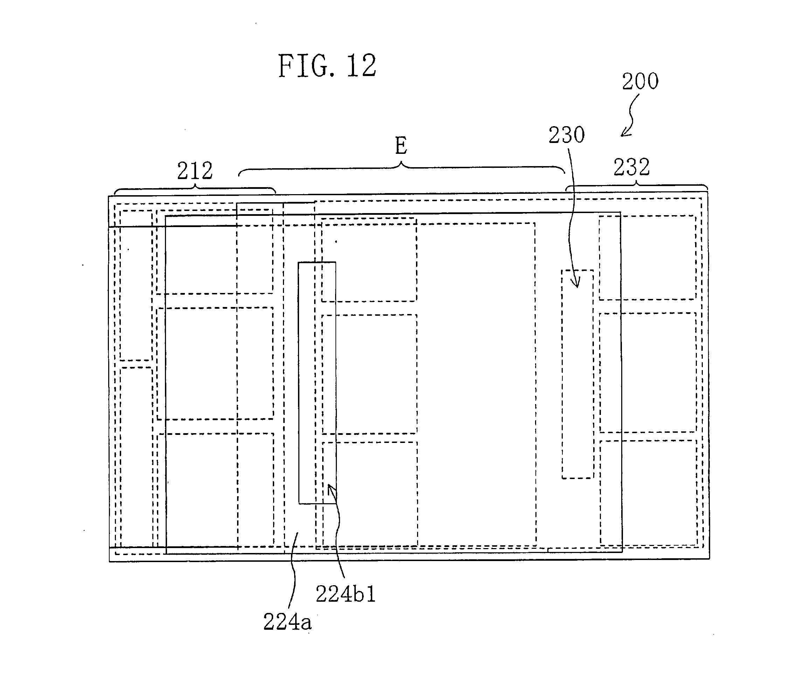

The structure of the display device **200** will now be described in greater detail with reference to FIG. **11** and FIG. **12**. FIG. **12** is a plan view schematically illustrating a portion corresponding to one pixel of the display device **200**.

In the present embodiment, the display panel **210** of the display device **200** is an active matrix type display panel including a substrate (e.g., glass substrate) **211**, and a light emission control section **212** provided on the substrate **211** for controlling the light emission from the organic EL element **220**. In a case where an organic EL element is used as a light-emitting element, the light emission control section **212** provided for each of the plurality of pixels typically includes a plurality of switching elements (e.g., TFTs) and a capacitor.

Moreover, the organic EL element **220** and the light-receiving element **230** are also provided on the substrate **211**. The light emission control section **212**, the organic EL element **220** and the light-receiving element **230** described above are provided on the rear side (away from the viewer) of the substrate **211**. Furthermore, a control circuit **232** connected to the light-receiving element **230** is provided on the substrate **211** for each of the plurality of pixels. The control circuit **232** typically has a function of reading out a signal, a function of amplifying a readout signal, and a function of resetting an element for amplifying a signal, and includes, for example, a read transistor for reading out a signal, an amplification transistor for amplifying the readout signal, a reset transistor for resetting the amplification transistor, an addressing transistor, etc.

The organic EL element **220** includes a light-emitting layer **222** and a pair of electrodes **224a** and **224b** interposing the light-emitting layer **222** therebetween. The electrode **224a**, one of the pair of electrodes **224a** and **224b** that is provided closer to the viewer, is made of a transparent conductive material (e.g., ITO) and electrically connected to the light emission control section **212**, and functions as an anode. Moreover, the electrode **224b** provided on the rear side is typically made of a metal (e.g., Ca and Ag), and functions as a cathode. The light-emitting layer **222** emits light according to the level of the current supplied to the organic EL element **220** via the light emission control section **212**.

In the display device **200**, the organic EL element **220** as a light-emitting element, the light emission control section **212**, the light-receiving element **230** and the control circuit **232** are provided on the viewer side of the substrate **211**. More specifically, the light emission control section **212**, the light-receiving element **230** and the control circuit **232** are provided on the viewer-side surface of the substrate **211**, and a flattening layer **214** is formed so as to cover these elements. The organic EL element **220** is provided on the flattening layer **214**.

The display device **200** is a so-called "top-emission type" organic EL display device that draws light for displaying an image toward the side away from the substrate **211**. The anode **224a** provided on the viewer side (the front side of the panel) with respect to the light-emitting layer **222** is made of a transparent conductive material, whereby light emitted from the light-emitting layer **222** is output toward the viewer and used for displaying an image. Moreover, the cathode **224b** provided on the rear side with respect to the light-emitting layer **222** includes an opening **224b1**, and a portion of light emitted from the light-emitting layer **222** is output toward the rear side through the opening **224b1** to illuminate the illuminated object **1000**. Since the display device **200** is a top-emission type display device, it is possible to employ a structure where the organic EL element **220** is placed over the light emission control section **212**, etc. Therefore, it is possible to improve the aperture ratio over a bottom-emission type display device, thus realizing a higher brightness and a higher definition.

The light-receiving element **230** receives light reflected by the illuminated object **1000**, and detects the intensity thereof. The light-receiving element **230** is, for example, a photodiode.

The organic EL element **220** and the light emission control section **212** of the display device **200** can be produced by using a known method for producing an organic EL display device. Moreover, the control circuit **232** connected to the light-receiving element **230** and the light-receiving element **230** can also be produced by using a known production method. In the configuration where an active matrix type display panel **210** is used as in the present embodiment, the light-receiving element **230** and the control circuit **232** can be formed on the substrate **211**, on which the light emission control section **212** of the display panel **210** is formed, by using a process similar to that for forming the light emission control section **212**. Thus, it is no longer necessary to later implement the light-receiving element **230** and the control circuit **232** on the display panel **210** or to provide lines for routing, whereby it is possible to reduce the power consumption and to suppress the increase in the cost. Moreover, in a case where an active matrix type display panel **210** is used, it is possible to suitably produce a monolithic substrate **211** in which the light emission control section **212**, the light-receiving element **230**, the control circuit **232**, etc., are formed, by using a polysilicon layer having a high electron mobility or a continuous grain silicon (CGS) layer as a semiconductor layer.

The operation of the display device **200** will now be described. The display device **200** is capable of not only displaying image information but also reading image information.

First, the operation of displaying image information will be described. An image is displayed as the organic EL element **220** provided for each pixel emits light at a predetermined intensity. In this process, a light-emitting region **E** illustrated in FIG. **12** contributes to the display operation. In the present embodiment, the organic EL element **220** is driven in an active matrix driving method by the light emission control section **212** provided for each pixel.

Next, the operation of reading image information will be described. The organic EL element **220** emits light to illuminate the illuminated object **1000** placed on the rear side of the panel. The light-receiving element **230** provided for each pixel receives the light reflected by the illuminated object **1000** and detects the intensity thereof thereby reading the image information of the surface of the illuminated object **1000**. If light-emitting elements emitting different colors of light (e.g., organic EL elements emitting red light, green light and blue light) are provided as the light-emitting elements, it is possible to read color information of the surface of the illuminated object **1000**, whereby it is possible to read image information as color image information (colored image information).

The display device **200** includes a light-emitting element (the organic EL element **220** in the illustrated example) for emitting light for displaying an image toward the front side of the panel (toward the viewer) while emitting light toward an illuminated object on the rear side of the panel (away from the viewer), and the light-receiving element **230** for receiving light reflected by the illuminated object, whereby it is possible not only to display an image but also to read image information of the surface of the illuminated object. In other words, the display device **200** has both a function as a planar display device and a function as a planar scanner. Thus, the display device **200** has both a function of scanning a page to read page information as image information, i.e., a function as a reading section, and a function of displaying image information (multimedia information), i.e., a function as a display section, and can be used as the user terminal **30** of the multimedia information provision system **100**. It typically further has a structure functioning as a transmission/reception section, and it may further include a structure functioning as a storage section or an output section, as necessary.

Moreover, in the display device **200**, the display panel **210** has both a function of displaying an image and a function of reading an image, and the light used for displaying an image and the light used for reading an image are emitted from a common light-emitting element. Thus, with a simple, thin and light-weight structure, it is capable of both displaying and reading image information.

Note that while a user terminal having a mechanically-integrated structure has been described as a preferred embodiment of the user terminal **30**, the user terminal **30** does not need to be mechanically integrated, but may alternatively include, for example, a reading section and a display section, separate from each other, that cooperatively function as the user terminal **30**.

### INDUSTRIAL APPLICABILITY

As described above, the multimedia information provision system, the multimedia information provision method, the user terminal, the main server and the associated server of the present invention are useful for a system and a method for providing, to a reader of a text information medium such as a newspaper, multimedia information relating to an article thereof, and are particularly suitable for suppressing the capacity of a database for multimedia information associated with page information to be small.

## Claims

1. A multimedia information provision system, comprising a first server (10), a second server (20), and a user terminal (30) connected to one another via an information communication network (40), for providing, to the user terminal, multimedia information associated with page information input to the user terminal, wherein:
the user terminal includes a reading section (32) for reading page information from a page;
the first server includes a first database (12) storing page information addresses associated with page information, and a retrieval section (14) for retrieving, from the first database, a page information address associated with the page information that has been read by the reading section of the user terminal and transmitted from the user terminal to the first server; and
the second server includes a second database (22) storing multimedia information associated with the page information addresses stored in the first database, and in response to the page information address that has been retrieved by the retrieval section and transmitted to the second server from the first server transmits, from the second database to the user terminal, multimedia information associated with said page information address.

2. The multimedia information provision system of claim 1, wherein the first server further includes an analysis section (16) for analyzing the page information transmitted from the user terminal to obtain text information, and the retrieval section retrieves the page information address based on the text information obtained by the analysis section.

3. The multimedia information provision system of claim 1, wherein the user terminal includes a display section (34) for displaying the multimedia information transmitted from the second server.

4. The multimedia information provision system of claim 1, wherein the reading section provided in the user terminal is a scanner for scanning the page to read the page information as image information.

5. The multimedia information provision system of claim 1, wherein:
the first server is owned by a newspaper company, the second server is owned by a television station, and the user terminal is owned by a newspaper subscriber; and
the reading section provided in the user terminal reads the page information from a page of a newspaper.

6. The multimedia information provision system of claim 1, wherein the user terminal includes a storage section (36) for saving the multimedia information transmitted from the second server.

7. The multimedia information provision system of claim 1, wherein the user terminal includes an output section (37) for externally outputting the multimedia information transmitted from the second server.

8. The multimedia information provision system of claim 1, wherein the second server transmits, from the second database to the first server, the multimedia information associated with the page information address retrieved by the retrieval section of the first server.

9. The multimedia information provision system of claim 1, wherein the multimedia information stored in the second database of the second server includes image information and/or audio information.

10. The multimedia information provision system of claim 1, wherein:
the reading section of the user terminal includes a scanner for scanning a page of a newspaper to read image information of the newspaper article;
the first database is an article address database storing article addresses associated with newspaper articles, the first server includes an analysis section for analyzing the image information that has been read by the scanner and transmitted from the user terminal to obtain text information, and the retrieval section is arranged to retrieve, from the article address database, an article address based on the text information obtained by the analysis section;
the second database is a multimedia information database storing multimedia information associated with the article addresses stored in the article address database, and in response to the article address that has been retrieved by the retrieval section and transmitted to the second server from the first server transmits, from the multimedia information database to the user terminal, multimedia information associated with said article address; and
the user terminal further includes a display section for displaying the multimedia information transmitted from the second server.

11. The multimedia information provision system of claim 10, wherein the first server is owned by a newspaper company, the second server is owned by a television station, and the user terminal is owned by a newspaper subscriber.

12. The multimedia information provision system of claim 10, wherein the multimedia information stored in the multimedia information database of the second server includes image information and/or audio information.

13. The multimedia information provision system of claim 1 or 10, wherein:
the user terminal includes a transmission/reception section (38a, 38b) for transmitting/receiving information to/from the first server and the second server;
the first server includes a transmission/reception section (18a, 18b) for transmitting/receiving information to/from the user terminal and the second server; and
the second server includes a transmission/reception section (28a, 28b) for transmitting/receiving information to/from the user terminal and the first server.

14. A multimedia information provision method, using a first server (10), a second server (20) and a user terminal (30) connected to one another via an information communication network (40), for providing, to the user terminal, multimedia information associated with page information input to the user terminal, the method comprising:
a reading step (S1) of reading page information from a page, at the user terminal;
a retrieval step (S3) of retrieving, from a first database, of the first server, storing page information addresses associated with page information, a page information address associated with the page information that has been read at the user terminal in the reading step; and
a multimedia information transmission step (S4) of transmitting, from a second database storing multimedia, of the second server, information associated with the page information addresses stored in the first database to the user terminal, multimedia information associated with the page information address that has been retrieved in the retrieval step and has been transmitted to the second server from the first server.

15. The multimedia information provision method of claim 14, wherein:
the method further comprises an analysis step (S2) of analyzing the page information that has been read in the reading step to obtain text information, at the first server; and
a page information address is retrieved based on the text information obtained in the analysis step in the retrieval step.

16. The multimedia information provision method of claim 14, further comprising a display step (S5) of displaying the multimedia information transmitted from the second server, at the user terminal.

17. A user terminal (30) connected to a main server (10) and an associated server (20) via an information communication network (40), comprising:
a reading section (32) for reading page information from a page;
a transmission section (38a) for transmitting page information that has been read by the reading section to the main server; and
a reception section (38b) for receiving multimedia information from the associated server, wherein:
the main server includes a first database (12) storing page information addresses associated with page information and a retrieval section for retrieving, from the first database, a page information address associated with the page information that has been read by the reading section and transmitted from the transmission section,
the associated server includes a second database (22) storing multimedia information associated with the page information addresses stored in the first database and in response to the page information address that has been retrieved by the retrieval section and transmitted to the associated server from the main server transmits to the reception section of the user terminal multimedia information associated with said page information address.

18. A main server (10) connected to a user terminal (30) and an associated server (20) via an information communication network (40), the user terminal including a reading section (32) for reading page information from a page, the main server comprising:
a first database (12) storing page information addresses associated with page information;
a deception section (18b) for receiving page information that has been read from a page by the reading section and transmitted from said user terminal;
a retrieval section (14) for retrieving, from the first database, a page information address associated with the page information that has been received by the reception section; and
a transmission section (18a) for transmitting to the associated server the page information address that has been retrieved by the retrieval section, wherein:
the associated server (20) includes a second database (22) storing multimedia information associated with the page information addresses stored in the first database and in response to the page information address that has been retrieved by said retrieval section and transmitted from the transmission section transmits to the user terminal multimedia information associated with said page information address.

19. An associated server (20) connected to a user terminal (30) and a main server (20) via an information communication network (40), the user terminal including a reading section (32) for reading page information from a page, the main server including a first database (12) storing page information addresses associated with page information and a retrieval section for retrieving, from the first database, a page information address associated with the page information that has been read from a page by the reading section of the user terminal and transmitted from the user terminal to the main server, the associated server comprising:
a second data base (22) storing multimedia information associated with the page information addresses stored in the first database;
a reception section (28b) for receiving the page information address that has been retrieved by the retrieval section from the main server; and
a transmission section (28a) for transmitting to the user terminal, in response to the page information address that has been received by the reception section, multimedia information associated with said page information address.

## Patentansprüche

1. System zur Bereitstellung von Multimedia Information, welches einen ersten Server (10), einen zweiten Server (20) und ein Benutzerterminal (30) aufweist, welche über ein Informationskommunikationsnetzwerk (40) miteinander verbunden sind, zum Bereitstellen von Multimediainformation an das Benutzerterminal, welche mit Seiteninformation assoziiert ist, welche in das Benutzerterminal eingegeben werden, wobei:
das Benutzerterminal einen Leseabschnitt (32) aufweist, zum Lesen von Seiteninformation von einer Seite;
der erste Server eine erste Datenbank (12) aufweist, welche Seiteninformationsadressen speichert, die mit Seiteninformation assoziiert sind, sowie eine Rückgewinnungseinheit (14) zum Einholen einer Seiteninformationsadresse von der ersten Datenbank, welche der Seiteninformation zugeordnet ist, die von dem Leseabschnitt des Benutzerterminals gelesen und von dem Benutzerterminal an den ersten Server übertragen wurde; und
- der zweite Server eine zweite Datenbank (22) aufweist, welche Multi-mediainformation speichert, die den in der ersten Datenbank gespeicherten Seiteninformationsadressen zugeordnet sind, und als Antwort auf die Seiteninformationsadresse, welche die Rückgewinnungseinheit eingeholt hat und welche von dem ersten Server an den zweiten Server übertragen wurde, Multimediainformation, welche mit der Seiteninformationsadresse assoziiert ist, von der zweiten Datenbank an das Benutzerterminal überträgt.

2. System nach Anspruch 1, bei dem der erste Server einen Analyseabschnitt (16) aufweist, zum Analysieren der Seiteninformation, die von dem Benutzerterminal übertragen wurde, um Textinformation einzuholen, wobei die Rückgewinnungseinheit die Seiteninformationsadresse einholt, die auf der Textinformation basiert, welche von dem Analyseabschnitt erhalten wurde.

3. System nach Anspruch 1, bei dem das Benutzerterminal einen Darstellungsabschnitt (34) zum Darstellen der Multimediainformation aufweist, die von dem zweiten Server übertragen wurden.

4. System nach Anspruch 1, bei dem der in dem Benutzerterminal bereitgestellte Leseabschnitt ein Bildabtaster zum Abtasten der Seite ist, um die Seiteninformation als Bildinformation zu lesen.

5. System nach Anspruch 1, bei dem:
- der erste Server einem Zeitungsverlag, der zweite Server einer Fernsehanstalt und das Benutzerterminal einem Zeitungsabonnenten zugeordnet sind; und
- der Leseabschnitt, der in dem Benutzerterminal bereitgestellt ist, die Seiteninformation von einer Seite einer Zeitung liest.

6. System nach Anspruch 1, bei dem das Benutzerterminal einen Speicherabschnitt (36), zum Speichern der Multimediainformation aufweist, welche von dem zweiten Server übertragen wird.

7. System nach Anspruch 1, bei dem das Benutzerterminal einen Ausgabeabschnitt (37), zum externen Ausgeben der Multimediainformation aufweist, welche von dem zweiten Server übertragen wird.

8. System nach Anspruch 1, bei dem der zweite Server die Multimediainformation von der ersten Datenbank an den zweiten Server überträgt, welche der Seiteninformationsadresse zugeordnet ist, die von dem Rückgewinnungsabschnitt des ersten Servers eingeholt wird.

9. System nach Anspruch 1, bei dem die in der zweiten Datenbank des zweiten Servers gespeicherte Multimediainformation Bildinformation und/oder Toninformation aufweist.

10. System nach Anspruch 1, bei dem:
- der Leseabschnitt des Benutzerterminals einen Bildabtaster, zum Abtasten einer Seite einer Zeitung aufweist, um Bildinformation des Zeitungsartikels zu lesen;
- die erste Datenbank eine Artikeladressdatenbank ist, die Artikeladressen speichert, welche mit Zeitungsartikeln assoziiert sind, der erste Server einen Analyseabschnitt, zum Analysieren der Bildinformation aufweist, die von dem Abtaster gelesen und von dem Benutzerterminal übertragen wurde, um Textinformation zu erhalten, und die Rückgewinnungseinheit zum Einholen einer Artikeladresse von der Artikeladressdatenbank eingerichtet ist, die auf Textinformation basiert, die von dem Analyseabschnitt erhalten wird;
- die zweite Datenbank eine Multimediainformationsdatenbank ist, welche Multimediainformation speichert, die mit den Artikeladressen, die in der Artikeladressdatenbank gespeichert sind assoziiert ist, und als Antwort auf die Artikeladresse, die von dem Rückgewinnungsabschnitt eingeholt wurde und an den zweiten Server von dem ersten Server übertragen wurde, der erste Server der Artikeladresse zugeordnete Multimediainformation von der Multimediainformaitonsdatenbank an das Benutzerterminal überträgt; und
- das Benutzerterminal zudem einen Darstellungsabschnitt, zum Darstellen der von dem zweiten Server übertragenen Multimediainformation aufweist.

11. System nach Anspruch 10, bei dem der erste Server einem Zeitungsverlag, der zweite Server einer Fernsehanstalt und das Benutzerterminal einem Zeitungsabonnenten zugeordnet sind.

12. System nach Anspruch 10, bei dem die in der Multimediainformationsdatenbank des zweiten Servers gespeicherte Multimediainformation Bildinformation und/oder Toninformation aufweist.

13. System nach Anspruch 1 oder 10, bei dem:
- das Benutzerterminal einen Übertragungs-/Empfangsabschnitt (38a, 38b) aufweist, zum Übertragen/Empfangen von Information an/von dem ersten Server und dem zweiten Server;
- der erste Server einen Übertragungs-/Empfangsabschnitt (18a, 18b) aufweist, zum Übertragen/Empfangen von Information an/von dem Benutzerterminal und dem zweiten Server; und
- der zweite Server einen Übertragungs-/Empfangsabschnitt (28a, 28b) aufweist, zum Übertragen/Empfangen von Information an/von dem Benutzerterminal und dem ersten Server.

14. Verfahren zur Bereitstellung von Information, das einen ersten Server (10), einen zweiten Server (20) und ein Benutzerterminal (30) verwendet, welche über ein Informationskommunikationsnetzwerk (40) miteinander verbunden sind, zum Bereitstellen von mit Seiteninformation, die in das Benutzerterminal eingegeben wird, assoziierter Multimediainformation an das Benutzerterminal, wobei das Verfahren die folgenden Schritte aufweist:
- einen Leseschritt (S1) des Lesens von Seiteninformation von einer Seite an dem Benutzerterminal;
- einen Einholschritt (S3) des Einholens von einer ersten Datenbank des ersten Servers, welche mit Seiteninformation assoziierte Seiteninformationsadressen speichert, einer Seiteninformationsadresse, die der Seiteninformation zugeordnet ist, welche in dem Leseschritt in dem Benutzerterminal gelesen werden; und
- einen Multimediainformationsübertragungsschritt (S4) des Übertragens von Information von einer Multimedia speichernden zweiten Datenbank des zweiten Servers, die den in der ersten Datenbank gespeicherten Seiteninformationsadressen zugeordnet ist, an das Benutzerterminal, wobei die Multimediainformation mit der Seiteninformationsadresse assoziiert ist, die in dem Einholschritt eingeholt und von dem ersten Server an den zweiten Server übertragen wurde.

15. Verfahren nach Anspruch 14, bei dem:
- das Verfahren einen Analyseschritt (S2) des Analysierens der Seiteninformation aufweist, welche in dem Leseschritt gelesen wurde, um Textinformation zu erhalten, an dem ersten Server; und
- eine Seiteninformationsadresse auf Basis der Textinformation, die in dem Analyseschritt erhalten wurde, in dem Erhalteschritt erhalten wird.

16. Verfahren nach Anspruch 14, welches einen Darstellungsschritt (S5) des Darstellens der Multi-mediainformation auf dem Benutzerterminal aufweist, die von dem zweiten Server übertragen wird.

17. Benutzerterminal (30), welches mit einem Hauptserver (10) und einem assoziierten Server (20) über ein Informationskommunikationsnetzwerk (40) verbunden ist, welches Folgendes aufweist:
- einen Leseabschnitt (32) zum Lesen von Seiteninformation von einer Seite;
- einen Übertragungsabschnitt (38a) zum Übertragen von Seiteninformation, die von dem Leseabschnitt gelesen wurde, an den Hauptserver; und
- einen Empfangsabschnitt (38b) zum Empfangen von Multimediainformation von dem assoziierten Server, wobei:
- der Hauptserver eine erste Datenbank (12) aufweist, welche Seiteninformationsadressen speichert, die mit der Seiteninformation assoziiert sind, sowie eine Rückgewinnungseinheit zum Einholen einer Seiteninformationsadresse, die der Seiteninformation zugeordnet ist, die von dem Leseabschnitt gelesen und von dem Übertragungsabschnitt übertragen wurde, von der ersten Datenbank,
- der assoziierte Server eine zweite Datenbank (22) aufweist, die Multi-mediainformation speichert, welche den Seiteninformationsadressen zugeordnet ist, die in der ersten Datenbank gespeichert ist, und als Antwort auf die Seiteninformationsadresse, die von dem Rückgewinnungsabschnitt eingeholt und an den assoziierten Server von dem Hauptserver übertragen wurde, Multimediainformation an den Empfangsabschnitt des Benutzerterminals überträgt, welche der Seiteninformationsadresse zugeordnet ist.

18. Hauptserver (10), der mit einem Benutzerterminal (30) und einem assozlierten Server (20) über ein Informationskommunikationsnetzwerk (40) verbunden ist, wobei das Benutzerterminal einen Leseabschnitt (32) zum Lesen von Seiteninformation von einer Seite aufweist, wobei der Hauptserver Folgendes aufweist:
- eine erste Datenbank (12), die Seiteninformationsadressen speichert, die Seiteninformation zugeordnet sind;
- einen Empfangsabschnitt (18b) zum Empfangen von Seiteninformation, die von dem Leseabschnitt von einer Seite gelesen wurde und von dem Benutzerterminal übertragen wurde;
- eine Rückgewinnungseinheit (14) zum Einholen einer der Seiteninformation, die von dem Empfangsabschnitt empfangen wurde, zugeordneten Seiteninformationsadresse von einer ersten Datenbank; und
- einen Übertragungsbereich (18a) zum Übertragen der Seiteninformationsadresse an den assoziierten Server, die von dem Rückgewinnungsabschnitt eingeholt wurde, wobei:
- der assoziierte Server (20) eine zweite Datenbank (22) aufweist, die Multimediainformation speichert, welche den Seiteninformationsadressen zugeordnet sind, die in der ersten Datenbank gespeichert sind und als Antwort auf die Seiteninformationsadresse, die von dem Rückgewinnungsabschnitt eingeholt und von dem Übertragungsabschnitt übertragen wurde, an das Benutzerterminal Multimediainformation überträgt, die der Seiteninformationsadresse zugeordnet ist.

19. Assoziierter Server (20), der mit einem Benutzerterminal (30) und einem Hauptserver (20) über ein Informationskommunikationsnetzwerk (40) verbunden ist, wobei das Benutzerterminal einen Leseabschnitt (32) zum Lesen von Seiteninformation von einer Seite aufweist, wobei der Hauptserver eine erste Datenbank (12) aufweist, welche Seiteninformationsadressen speichert, die Seiteninformation zugeordnet sind, sowie eine Rückgewinnungseinheit zum Einholen einer Seiteninformationsadresse, die der Seiteninformation zugeordnet ist, die von einer Seite von dem Leseabschnitt des Benutzererminals gelesen und von dem Benutzerterminal an den Hauptserver übertragen wurde, von der ersten Datenbank, wobei der assoziierte Server Folgendes aufweist:
- eine zweite Datenbank (22), die Multimediainformation speichert, die den Seiteninformationsadressen zugeordnet sind, die in der ersten Datenbank gespeichert sind;
- einen Empfangsabschnitt (28b) zum Empfangen der Seiteninformationsadresse, die von dem Rückgewinnungsabschnitt von dem Hauptserver eingeholt wurde; und
- einen Übertragungsabschnitt (28a) zum Übertragen an das Benutzerterminal, als Antwort auf die Seiteninformationsadresse, die von dem Empfangsabschnitt empfangen wurde, von Multimediainformation, die der Seiteninformationsadresse zugeordnet ist.

## Revendications

1. Système de fourniture d'informations multimédias, comprenant un premier serveur (10), un deuxième serveur (20) et un terminal utilisateur (30) connectés les uns aux autres par l'intermédiaire d'un réseau de communication d'informations (40), pour fournir, au terminal utilisateur, des informations multimédias associées à des informations de page entrées sur le terminal utilisateur, dans lequel :
le terminal utilisateur comprend une section de lecture (32) destinée à lire les informations de page provenant d'une page ;
le premier serveur comprend une première base de données (12) stockant des adresses d'informations de page associées aux informations de page, et une section d'extraction (14) destinée à extraire, de la première base de données, une adresse d'informations de page associée aux informations de page qui ont été lues par la section de lecture du terminal utilisateur et transmises depuis le terminal utilisateur vers le premier serveur ; et
le deuxième serveur comprend une deuxième base de données (22) stockant des informations multimédias associées aux adresses d'informations de page stockées dans la première base de données et, en réponse à l'adresse d'informations de page qui a été extraite par la section d'extraction et transmise vers le deuxième serveur depuis le premier serveur, transmet, depuis la deuxième base de données vers le terminal utilisateur, des informations multimédias associées à ladite adresse d'informations de page.

2. Système de fourniture d'informations multimédias selon la revendication 1, dans lequel le premier serveur comprend en outre une section d'analyse (16) destinée à analyser les informations de page transmises depuis le terminal utilisateur pour obtenir des informations de texte, et la section d'extraction extrait l'adresse d'informations de page en fonction des informations de texte obtenues par la section d'analyse.

3. Système de fourniture d'informations multimédias selon la revendication 1, dans lequel le terminal utilisateur comprend une section d'affichage (34) destinée à afficher les informations multimédias transmises depuis le deuxième serveur.

4. Système de fourniture d'informations multimédias selon la revendication 1, dans lequel la section de lecture fournie dans le terminal utilisateur est un numériseur destiné à numériser la page pour lire les informations de page comme des informations d'image.

5. Système de fourniture d'informations multimédias selon la revendication 1, dans lequel :
le premier serveur est détenu par une société de presse, le deuxième serveur est détenu par une station de télévision et le terminal utilisateur est détenu par un abonné de presse ; et
la section de lecture fournie dans le terminal utilisateur lit les informations de page à partir d'une page d'un journal.

6. Système de fourniture d'informations multimédias selon la revendication 1, dans lequel le terminal utilisateur comprend une section de stockage (36) destinée à enregistrer les informations multimédias transmises depuis le deuxième serveur.

7. Système de fourniture d'informations multimédias selon la revendication 1, dans lequel le terminal utilisateur comprend une section de sortie (37) destinée à sortir de façon externe les informations multimédias transmises depuis le deuxième serveur.

8. Système de fourniture d'informations multimédias selon la revendication 1, dans lequel le deuxième serveur transmet, depuis la deuxième base de données vers le premier serveur, les informations multimédias associées à l'adresse d'informations de page extraite par la section d'extraction du premier serveur.

9. Système de fourniture d'informations multimédias selon la revendication 1, dans lequel les informations multimédias stockées dans la deuxième base de données du deuxième serveur comprennent des informations d'image et/ou des informations audio.

10. Système de fourniture d'informations multimédias selon la revendication 1, dans lequel :
la section de lecture du terminal utilisateur comprend un numériseur destiné à numériser une page d'un journal pour lire les informations d'image de l'article de presse ;
la première base de données est une base de données d'adresses d'article stockant des adresses d'article associées à des articles de presse, le premier serveur comprend une section d'analyse destinée à analyser les informations d'image qui ont été lues par le numériseur et transmises depuis le terminal utilisateur pour obtenir des informations de texte, et la section d'extraction est agencée pour extraire, depuis la base de données d'adresses d'article, une adresse d'article en fonction des informations de texte obtenues par la section d'analyse ;
la deuxième base de données est une base de données d'informations multimédias stockant des informations multimédias associées aux adresses d'article stockées dans la base de données d'adresses d'article et, en réponse à l'adresse d'article qui a été extraite par la section d'extraction et transmise vers le deuxième serveur depuis le premier serveur, transmet, depuis la base de données d'informations multimédias vers le terminal utilisateur, des informations multimédias associées à ladite adresse d'article ; et
le terminal utilisateur comprend en outre une section d'affichage destinée à afficher les informations multimédias transmises depuis le deuxième serveur.

11. Système de fourniture d'informations multimédias selon la revendication 10, dans lequel le premier serveur est détenu par une société de presse, le deuxième serveur est détenu par une station de télévision, et le terminal utilisateur est détenu par un abonné de presse.

12. Système de fourniture d'informations multimédias selon la revendication 10, dans lequel les informations multimédias stockées dans la base de données d'informations multimédias du deuxième serveur comprennent des informations d'image et/ou des informations audio.

13. Système de fourniture d'informations multimédias selon la revendication 1 ou 10, dans lequel :
le terminal utilisateur comprend une section de transmission/réception (38a, 38b) destinée à transmettre/recevoir des informations en direction/en provenance du premier serveur et du deuxième serveur ;
le premier serveur comprend une section de transmission/réception (18a, 18b) destinée à transmettre/recevoir des informations en direction/en provenance du terminal utilisateur et du deuxième serveur ; et
le deuxième serveur comprend une section de transmission/réception (28a, 28b) destinée à transmettre/recevoir des informations en direction/en provenance du terminal utilisateur et du premier serveur.

14. Procédé de fourniture d'informations multimédias, utilisant un premier serveur (10), un deuxième serveur (20) et un terminal utilisateur (30) connectés les uns aux autres par l'intermédiaire d'un réseau de communication d'informations (40), destiné à fournir, au terminal utilisateur, des informations multimédias associées à des informations de page entrées sur le terminal utilisateur, le procédé comprenant :
une étape de lecture (S1) destinée à lire des informations de page provenant d'une page, au niveau du terminal utilisateur;
une étape d'extraction (S3) destinée à extraire, à partir d'une première base de données du premier serveur stockant des adresses d'informations de page associées aux informations de page, une adresse d'informations de page associée aux informations de page qui ont été lues au niveau du terminal utilisateur à l'étape de lecture ; et
une étape de transmission d'informations multimédias (S4) destinée à transmettre, depuis une deuxième base de données du deuxième serveur stockant des informations multimédias associées aux adresses d'informations de page stockées dans la première base de données vers le terminal utilisateur, des informations multimédias associées à l'adresse d'informations de page qui a été extraite à l'étape d'extraction et a été transmise vers le deuxième serveur depuis le premier serveur.

15. Procédé de fourniture d'informations multimédias selon la revendication 14, dans lequel
le procédé comprend en outre une étape d'analyse (S2) destinée à analyser les informations de page qui ont été lues à l'étape de lecture pour obtenir des informations de texte, au niveau du premier serveur ; et
une adresse d'informations de page est extraite en fonction des informations de texte obtenues à l'étape d'analyse à l'étape d'extraction.

16. Procédé de fourniture d'informations multimédias selon la revendication 14, comprenant en outre une étape d'affichage (S5) destinée à afficher les informations multimédias transmises depuis le deuxième serveur, au niveau du terminal utilisateur.

17. Terminal utilisateur (30) connecté à un serveur principal (10) et un serveur associé (20) par l'intermédiaire d'un réseau de communication d'informations (40), comprenant :
une section de lecture (32) destinée à lire des informations de page provenant d'une page;
une section de transmission (38a) destinée à transmettre des informations de page qui ont été lues par la section de lecture vers le serveur principal ; et
une section de réception (38b) destinée à recevoir des informations multimédias en provenance du serveur associé, dans lequel :
le serveur principal comprend une première base de données (12) stockant des adresses d'informations de page associées à des informations de page et une section d'extraction destinée à extraire, depuis la première base de données, une adresse d'informations de page associée aux informations de page qui ont été lues par la section de lecture et transmises depuis la section de transmission,
le serveur associé comprend une deuxième base de données (22) stockant des informations multimédias associées aux adresses d'informations de page stockées dans la première base de données et, en réponse à l'adresse d'informations de page qui a été extraite par la section d'extraction et transmise vers le serveur associé depuis le serveur principal, transmet vers la section de réception du terminal utilisateur des informations multimédias associées à ladite adresse d'informations de page.

18. Serveur principal (10) connecté à un terminal utilisateur (30) et un serveur associé (20) par l'intermédiaire d'un réseau de communication d'informations (40), le terminal utilisateur comprenant une section de lecture (32) destinée à lire des informations de page provenant d'une page, le serveur principal comprenant :
une première base de données (12) stockant des adresses d'informations de page associées aux informations de page ;
une section de réception (18b) destinée à recevoir des informations de page qui ont été lues depuis une page par la section de lecture et transmises depuis ledit terminal utilisateur ;
une section d'extraction (14) destinée à extraire, depuis la première base de données, une adresse d'informations de page associée aux informations de page qui ont été reçues par la section de réception ; et
une section de transmission (18a) destinée à transmettre vers le serveur associé l'adresse d'informations de page qui a été extraite par la section d'extraction, dans lequel :
le serveur associé (20) comprend une deuxième base de données (22) stockant des informations multimédias associées aux adresses d'informations de page stockées dans la première base de données et, en réponse à l'adresse d'informations de page qui a été extraite par ladite section d'extraction et transmise depuis la section de transmission, transmet vers le terminal utilisateur des informations multimédias associées à ladite adresse d'informations de page.

19. Serveur associé (20) connecté à un terminal utilisateur (30) et un serveur principal (20) par l'intermédiaire d'un réseau de communication d'informations (40), le terminal utilisateur comprenant une section de lecture (32) destinée à lire des informations de page depuis une page, le serveur principal comprenant une première base de données (12) stockant des adresses d'informations de page associées aux informations de page et une section d'extraction destinée à extraire, de la première base de données, une adresse d'informations de page associée aux informations de page qui ont été lues depuis une page par la section de lecture du terminal utilisateur et transmises depuis le terminal utilisateur vers le serveur principal, le serveur associé comprenant :
une deuxième base de données (22) stockant des informations multimédias associées aux adresses d'informations de page stockées dans la première base de données ;
une section de réception (28b) destinée à recevoir l'adresse d'informations de page qui a été extraite par la section d'extraction depuis le serveur principal ; et
une section de transmission (28a) destinée à transmettre vers le terminal utilisateur, en réponse à l'adresse d'informations de page qui a été reçue par la section de réception, des informations multimédias associées à ladite adresse d'informations de page.
